# EUROPEAN PATENT APPLICATION

(11) **EP 0 967 815 A2**
(43) Date of publication of application: **29.12.1999**
(21) Application number: 99401578.2
(22) Date of filing: 24.06.1999
(51) Int. Cl.: H04Q 7/32

(54) **Access method with selection criteria**

(30) Priority: 25.06.1998 JP 19509698; 31.05.1999 JP 15272999
(71) Applicant: CANON KABUSHIKI KAISHA, Tokyo (JP)
(72) Inventor: Miura, Hiroya, Ohta-ku, Tokyo (JP)
(74) Representative: Rinuy, Santarelli

(57) **Abstract**

A radio communication apparatus and a communication system which enable selection of optimum connection destination in an arbitrary area and establishment of connection with the selected connection destination. The selection is made in accordance with a radio control device connected to the radio communication apparatus. For example, the apparatus can be connected to a connection destination at the lowest charge, and can access connection with the Internet or the like.

## Description

### BACKGROUND OF THE INVENTION

### FIELD OF THE INVENTION

The present invention relates to a radio communication apparatus and its control method.

### DESCRIPTION OF RELATED ART

Conventionally, a call origination number (telephone number) to originate a call to a communication destination and establish line connection with the destination has been mostly inputted by a user by dialing or key-depressing the call origination number or abbreviated number upon call origination, regardless of audio/data communication. Further, even in a case where call origination numbers can be registered in a communication device, call origination to a connection destination has been made by dialing/key-depressing an abbreviated number of a previously-registered number of a connection destination, or selecting the connection destination from a registered connection destination list displayed in kana-syllabary order or alphabetical order.

On the other hand, generally, a communication cost is determined based on a time zone or the physical distance between a call originating side and a receiving side. In the latter case, if the distance between the call originating and receiving sides becomes longer, the communication cost increases, even though the communication periods remains the same.

In recent widespread use of the Internet, respective providers presenting access services to the Internet have access points in many areas. A user establishes connection with the Internet by accessing one of the access points via a telephone line network. As the access points are provided in respective areas, the user belonging to one of the areas can access an access point within the area, which reduces communication costs for the users. However, as the respective providers have different service areas, the users cannot always access an access point in the lowest-cost service area (within the same area). In addition, the respective providers have their own charging systems based on, e.g., existence/absence of contraction, existence/absence of monthly charge, and access period.

Further, in recent years, data communication utilizing mobile communication devices, handheld computers and the like realizes area free communication style.

Against this background, in communication utilizing mobile communication, there are needs for reduction of wasteful increase in communication cost and reduction of communication period as much as possible by providing a method of selecting a connection destination according to the circumstances from a plurality of connection destinations.

### SUMMARY OF THE INVENTION

The present invention has its object to provide a handheld communication apparatus which enables access to an optimum connection destination.

Further, another object of the present invention is to realize automatic or manual selection of an optimum connection destination in communication in an arbitrary area.

Other features and advantages of the present invention will be apparent from the following description taken in conjunction with the accompanying drawings, in which like reference characters designate the same name or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing the construction of a digital mobile communication apparatus according to a first embodiment of the present invention;
Fig. 2 is a flowchart showing an operation of the first embodiment;
Fig. 3 is an explanatory view showing position information in respective communication areas used in the first embodiment;
Fig. 4 is a table showing connection destination names, connection numbers of connection destinations, communication speeds and registered position information used in the first embodiment;
Fig. 5 is a flowchart showing an operation of a second embodiment of the present invention;
Fig. 6 is a table showing connection destination names, connection numbers of connection destinations, communication speeds and registered position information used in the second embodiment;
Fig. 7 is a block diagram showing the construction of the digital mobile communication apparatus according to a third embodiment of the present invention;
Fig. 8 is a flowchart showing an operation of the third embodiment;
Fig. 9 is a list showing areas, connection numbers, communication speeds, registered position information used in the third embodiment;
Fig. 10 is a list showing the connection destination names, connection numbers, registered position information, with weights, used in the third embodiment;
Fig. 11 is a flowchart showing an operation of a fourth embodiment of the present invention;
Fig. 12 is a table showing connection destination names, connection numbers of connection destinations, communication speeds, access charges for access to connection destinations, line use charges, data transmission charges regarding a predetermined amount of data, costs per unit period obtained by adding the access charges for access to connection destinations to the line use charges, and registered position information, used in the fourth embodiment;
Fig. 13 is a table showing connection destination names, communication speeds, data transmission charges for access to connection destinations, costs per unit period obtained by adding access charges for access to connection destinations to line use charges, and registered position information, used in the fourth embodiment; and
Fig. 14 is a flowchart showing mode change for switching between a mode explained in the first and second embodiments and a mode explained in the third and fourth embodiments.

### DETAILED DESCRIPTION OF THE PREFERRED EMBODIMENTS

Preferred embodiments of the present invention will now be described in detail in accordance with the accompanying drawings.

### [First Embodiment]

Hereinbelow, a first embodiment of the present invention will be described.

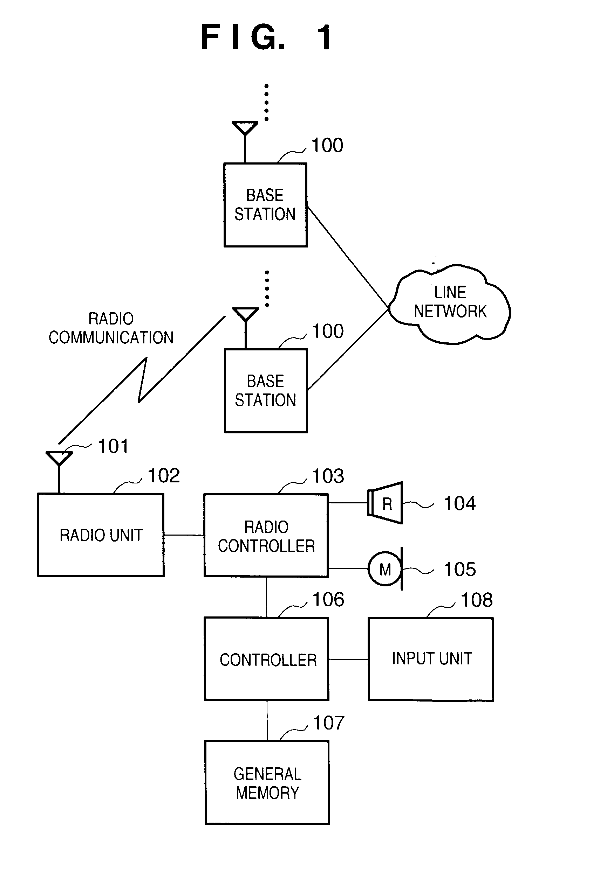

Fig. 1 is a block diagram showing the construction of a digital mobile communication apparatus as a handheld communication apparatus, according to the first embodiment of the present invention.

In Fig. 1, a radio unit 102 connected to a radio antenna 101 is a radio transceiver including a transmission/reception amplifier, an up/down converter, an AC/DC converter, a synthesizer and the like. A radio controller 103 includes a modem, a channel codec and an ADPCM audio codec. The radio controller 103 controls the radio unit 102 to transmit/receive transmission/reception data. Generally, the radio controller 103 controls power management of the radio unit 102 and the radio controller 103 itself.

Today data communication is performed using mobile communication apparatuses, however, the apparatuses are mainly used for audio communication. Accordingly, in the present embodiment, the apparatus includes the transceiver function which is not necessary for data communication.

A receiver 104 reproduces an analog signal (audio signal) D/A converted by the ADPCM audio codec of the radio controller 103 from digital data received via the radio unit 102. A microphone 105 plays a sound via the radio unit 102 and the radio antenna 101, A/D converted by the ADPCM audio codec of the radio controller 103 from an input analog signal (audio signal).

A controller 106 controls the overall digital mobile communication apparatus, and especially performs various control procedures according to the present invention. A general memory 107 contains programs and data for realizing various control means according to the present invention as described below.

An input unit 108 is used for call origination by a user. In the present embodiment, a call origination request is made by operating a call origination switch. A base station 100 is an arbitrary radio base station to perform radio communication with the mobile communication apparatus. The radio base station 100 establishes connection between the mobile communication apparatus with a line network such as an ISDN or telephone line network. Further, the line network has a plurality of access points for access to the Internet. The mobile communication apparatus access the Internet by accessing the access points.

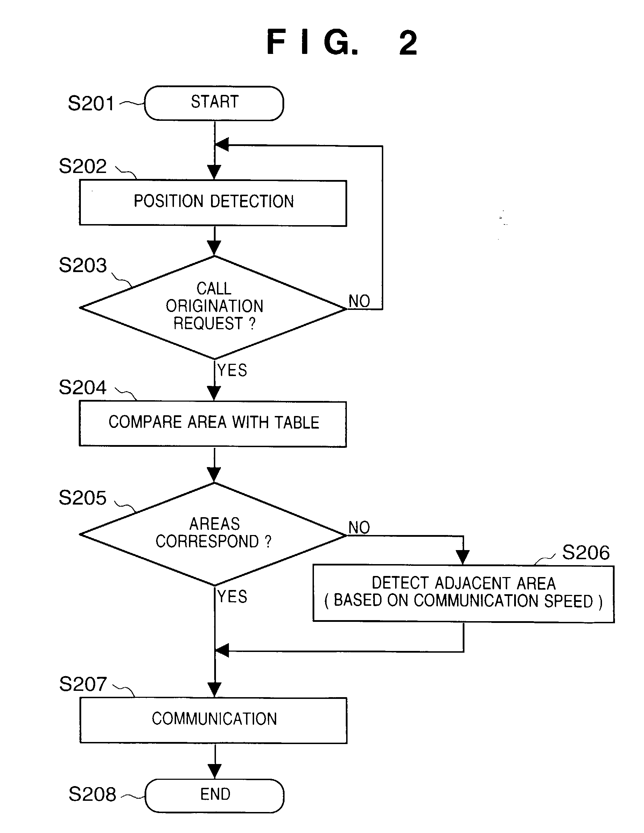

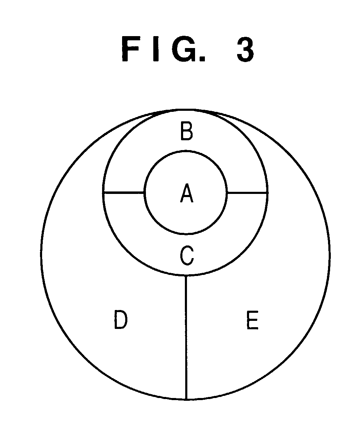

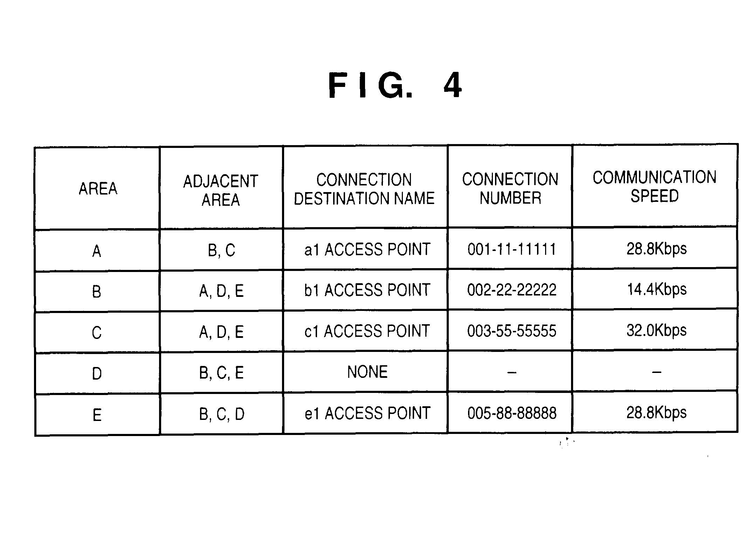

Fig. 2 is a flowchart showing a control procedure in the mobile communication apparatus having the above construction. Fig. 3 is an explanatory view showing respective communication areas used in the present embodiment. Fig. 4 is a table showing connection destination names (access point names), connection (telephone) numbers of connection destinations, communication speeds and registered position information (areas and adjacent areas) used in the present embodiment.

First, at step S201, the control starts, and at step S202, registered position information is obtained by radio communication via the radio antenna 101 between the radio base station 100 and the mobile communication apparatus.

For example, in a general method used in a PHS (Personal Handy-phone System) or the like in Japan, position information is registered into a data base of a network management exchange system, via a radio base station connected to a line network (public line network) such as an ISDN, by using a control frequency channel. That is, an area where a mobile communication apparatus is located is registered into the data base by using an ID of an arbitrary radio base station which can communicate with the apparatus.

Further, in some system, a radio base station itself has position information and transmits the position information in response to a request from a mobile communication apparatus.

The mobile communication apparatus of the present embodiment selects a connection destination based on such position information. That is, in a case where areas as shown in Fig. 3 are provided and position information A to D are allotted to the respective areas, when the mobile communication apparatus transmits/receives position information with an arbitrary radio base station located in the area A, the position of the mobile communication apparatus is defined in the area A.

That is, the position of the mobile communication apparatus of the present embodiment is a position in which the radio base station communicating with the apparatus exists rather than the position in which the mobile communication apparatus actually exists. Accordingly, even when the mobile communication apparatus exists in the area B, if the mobile communication apparatus is connected to the radio base station in the area A, the position of the apparatus is defined in the area A.
at step S203, when the user depresses a call origination request switch of the input unit 108, the controller 106 determines that a call origination request has been made. Then the registered position information obtained at step S202 is held, and the process proceeds to step S204.

At step S204, the registered position information (area) obtained at step S202 is compared with a table having connection destination names, connection (telephone) numbers of connection destinations, communication speeds and registered position information (areas and adjacent areas).

Note that in the present embodiment, as a communication charge per unit time is only a line use charge, and access charge by each communication destination is not considered. As a general line use charge, a line use charge for communication between an area in which the radio base station exists and a position in the same area is the lowest. The communication charge for communication with an adjacent area is the same in any adjacent area, and higher than the line use charge within the same area.

If a connection destination exists within an area corresponding to the position information, as communication within the same area is the lowest, the process proceeds to step S207 and communication is performed. Note that for convenience of explanation, the areas for charging as shown in Fig. 3 and connection destination information corresponding to the respective areas are as shown in Fig. 4.

At step S203, if the position information, obtained upon key-input of call origination request, indicates the area A, the information is compared with the table of Fig. 4 at step S204. As a connection destination name "a1 access point" corresponding to the area A exists, the process proceeds to step S207. Similarly, if the position information indicates the area B, the information is compared with the table of Fig. 4 at step S204, and as a connection destination name "b1 access point" corresponding to the area B exits, the process proceeds to step S207.

On the other hand, if no connection destination corresponding to the position information exists, the process proceeds to step S206, and communication is performed. That is, in this case, the position information obtained upon key-input of call original request indicates the area D. As there is no connection destination within the area defined as an area where the apparatus exists, the process proceeds to step S206, at which one of access points in the adjacent areas B, C and E is selected as a connection destination.

Further, if a plurality of adjacent areas exist, a connection destination may be selected by an arbitrary method. However, in the present embodiment, as it is assumed that line use charge per unit period is the same in communication with any adjacent area, the apparatus is connected to a connection destination name "c1 access point" of the area C with the highest communication speed and an advantageous charge.

At step S207, communication is performed with respect to the connection destination that was determined at step S204 as corresponding to the registered position information obtained at step S202, or the connection destination in adjacent area selected at step S206. Data to be communicated is read from the general memory 107 by the controller 106, and transmitted via the radio controller 103. Then, the communication ends at step S208.

Generally, mobile communication devices use a dry cell or a battery (secondary battery) as a power source for portability. Accordingly, if position detection (S202) is performed by radio communication between the present mobile communication apparatus and the radio base station 100 in Fig. 2, battery consumption of the apparatus is increased. Generally, to reduce electric power consumption, radio communication on position information is intermittently performed between the apparatus and the base station.

As described above, according to the present embodiment, in accordance with an area where the radio communication apparatus is located, a connection destination most cost-advantageous with regard to a current apparatus position is selected from the table of registered position information and a plurality of connection destinations, and communication can be made.

### [Second Embodiment]

Next, a second embodiment of the mobile communication apparatus of the present invention will be described. As in the case of the first embodiment, the mobile communication apparatus according to the second embodiment has a construction as shown in Fig. 1.

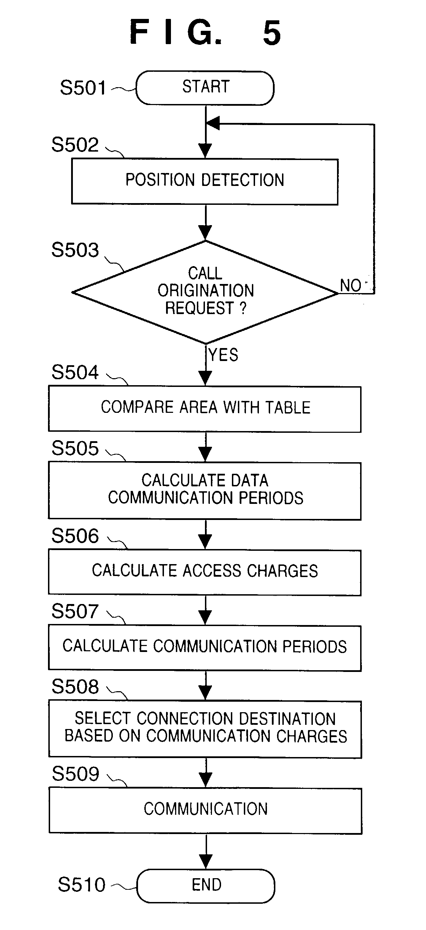

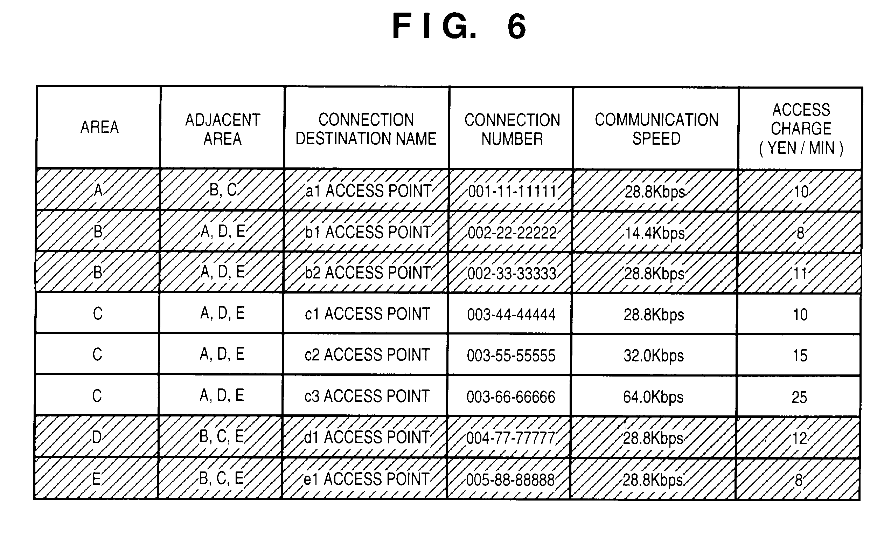

Further, Fig. 5 is a flowchart showing the control procedure according to the second embodiment. Fig. 6 is a table showing connection destination names, connection (telephone) numbers of connection destinations, communication speeds and registered position information (areas and adjacent areas) used in the second embodiment.

First, at step S501, the control starts, and at step S502, registered position information is obtained by radio communication via the radio antenna 101 between the radio base station 100 and the mobile communication apparatus. The registered position information may be obtained by the same way as described in the first embodiment, and a connection destination may be selected based on the registered position information as in the case of the first embodiment. That is, assuming that areas as shown in Fig. 3 are provided and position information A to D are allotted to the respective areas, when the mobile communication apparatus transmits/receives position information with an arbitrary radio base station located in the area A, the position of the mobile communication apparatus is defined in the area A.

At step S503, when the user depresses the call origination request switch of the input unit 108, the controller 106 determines that a call origination request has been made, and the registered position information obtained at step S502 is held, then the process proceeds to step S504.

At step S504, the registered position information obtained at step S502 is compared with a table having the connection destination names, connection (telephone) numbers of connection destinations, communication speeds, access charges for access to the connection destinations, and registered position information (areas and adjacent areas) as shown in Fig. 6, stored in the memory 107.

As in the case of the first embodiment, for convenience of explanation, the areas for charging as shown in Fig. 3 and connection destination information corresponding to the respective areas are as shown in Fig. 6. If the position information obtained upon key-input of call origination request at step S503 indicates the area C, the information is compared with the table of Fig. 6 at step S504, and a connection destination group corresponding to the area C is selected.

If there is no connection destination corresponding to the area C, a connection destination is selected from a connection destination group of an adjacent area, as described in the first embodiment. Here details will be omitted.

Next, at step S505, with regard to the connection destinations belonging to the area C selected at step S504, data communication periods are calculated from the amount of data to be communicated and the communication speed.

At step S506, access charges paid for access to the respective connection destinations are calculated from access charges per unit period defined in accordance with the respective connection destinations as shown in Fig. 6 and the data communication periods.

At step S507, since actual communication causes overhead upon start and end of communication, communication periods including the data communication periods and overhead periods are calculated.

At step S508, the access charges and line use charges are added as communication charges, and a connection destination is selected based on the communication charges.

Next, the contents of processing at steps S505 to S508 will be described in accordance with equations. Note that in the following description, digits to the right of the decimal point are rounded up within operator «» (e.g.: «4/3» = «1.333333....» = 2).

Further, in this embodiment, the amount of data to be communicated is 2048 kbits, and line use charge per unit period (within the same area) is 10 yen/min. For convenience of calculation, the excess time for connection and disconnection (overhead) is uniformly total 10 sec.

Then communication charges for the connection destinations belonging to the area C are sequentially calculated.
·c1 Access Point
   Communication speed: 28.8 Kbps
   Data communication period: (communication data amount)/(communication speed) = 2048 kbits/28.8 Kbps = 71.1 sec
   Communication period: (data communication period) + (overhead) = 71.1 sec + 10 sec = 81.1 sec
   Access charge: (access charge per unit period) × « (data communication period)/60 sec» = 10 yen × «71.1 sec/60 sec» = 20 yen
   Line use charge: (line use charge per unit period) × «(communication period)/60 sec» = 10 yen × «81.1 sec/60 sec» = 20 yen
   Communication charge: (access charge) + (line use charge) = 20 yen + 20 yen = 40 yen
· c2 Access Point
   Communication speed: 32 Kbps
   Data communication period: 2048 kbits/32 Kbps = 64 sec Communication period: 64 sec + 10 sec = 74 sec
   Access charge: 15 yen × «64 sec/60 sec» = 30 yen Line use charge: 10 yen × «74 sec/60 sec» = 20 yen Communication charge: 30 yen + 20 yen = 50 yen
· c3 Access Point
   Communication speed: 64 Kbps
   Data communication period: 2048 kbits/64 Kbps = 32 sec Communication period: 32 sec + 10 sec = 42 sec
   Access charge: 25 yen × «32 sec/60 sec» = 25 yen
   Line use charge: 10 yen × «42 sec/60 sec» = 10 yen Communication charge: 25 yen + 10 yen = 35 yen

At step S508, the communication charges are calculated from the access charges and the line use charges and compared with each other. As the communication charge for access to the c3 access point is the lowest, communication is performed with respect to the c3 access point at step S509. The data to be communicated is read by the controller 106 from the general memory 107 and transmitted through the radio controller 103. Thereafter, communication ends at step S510.

Note that the c3 access point enables communication at the highest communication speed, however, communication with an access point with the highest speed is not always advantageous in communication charge depending on charges for access to the respective connection destinations and communication data amount. For example, as it is apparent from the above calculation results, the communication speed of the c2 access point is higher than that of the c1 access point, however, the communication charge for access to the c1 access point is lower than that for access to the c2 access point. Accordingly, a lower-cost access point may be selected even though the communication speed is lower.

As described above, upon communication, a charge-advantageous communication destination can be selected from the table of registered position information and plural connection destinations, based on an area where the mobile communication apparatus is located.

In this embodiment, comparison is made among communication charges for access to the connection destinations within the area, however, even when connection is established with a connection destination in an adjacent area, with relatively high line use charge, the total communication charge might be lower depending on communication speed, accordingly, the selection of connection destination may be performed further in consideration of communication speed.

Further, if connection with a connection destination, once selected and accessed, has failed due to some reasons such as line busy status, communication can be performed by selecting the next connection destination.

### [Third Embodiment]

Next, a third embodiment of the mobile communication apparatus of the present invention will be described with reference to the drawings.

The third embodiment is partially different from the first embodiment. A communication destination is not automatically determined by the system, but is selected by the user from a displayed connection destination candidate list.

Further, the connection destination candidate list is displayed with weights as communication charges, such that an advantageous connection destination is indicated, and that any one of other connection destinations can be selected in accordance with the user's preference.

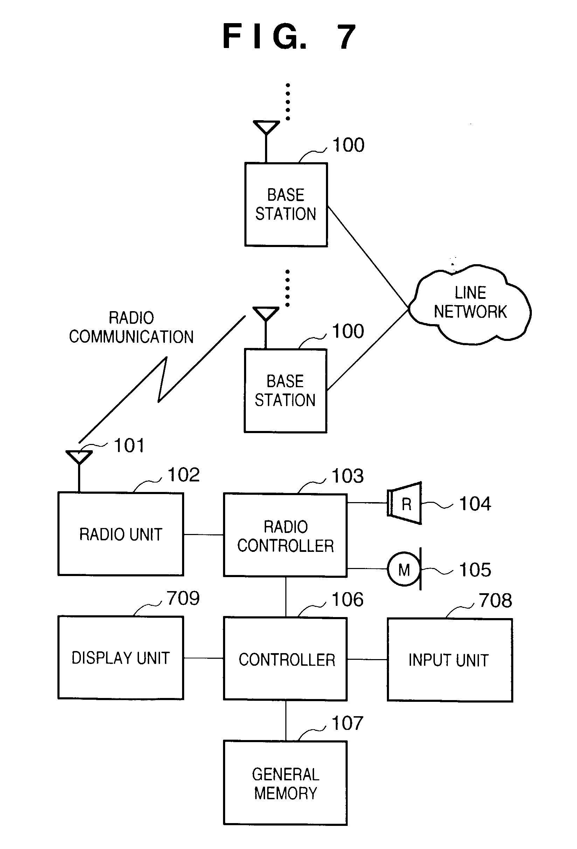

Fig. 7 is a block diagram showing the construction of the digital mobile communication apparatus according to the third embodiment of the present invention.

Fig. 7 has the same construction as that of Fig. 1 except that a display unit 709 is provided and the function of an input unit 708 is extended from the input unit 108 in Fig. 1. In Fig. 7, elements corresponding to those in Fig. 1 have the same reference numerals.

The input unit 708 is used by the user to make a call origination request, to make selection from data displayed on the display unit 709, or to input various information such as connection destination. Generally, the input unit 708 comprises an off-hook button, an on-hook button, a cursor key, a determination key, a cancel key, ten keys, the call origination request switch and the like.

The display unit 709 displays a connection destination list, various information and the like. In the present embodiment, the display unit 709 uses a full-matrix monochrome LCD as a display device. Even if the LCD is a color display device, there is no problem to provide display means that can be realized upon implementation of the present invention.

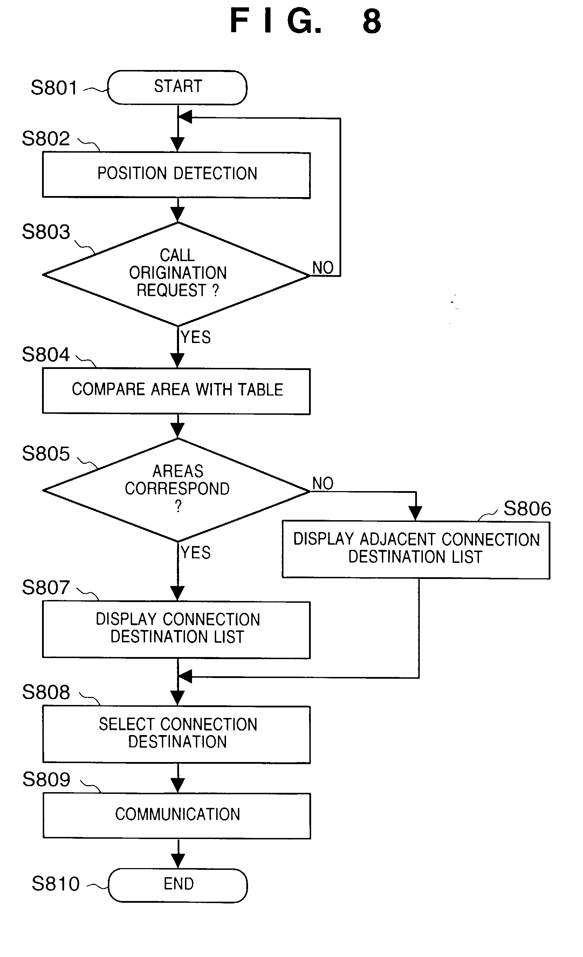

Fig. 8 is a flowchart showing the control procedure of the mobile communication apparatus according to the third embodiment.

Note that steps S801 to S805 correspond to steps S201 to S205 in Fig. 2 of the first embodiment.

First, the control starts at step S801, then at step S802, registered position information is obtained by radio transmission/reception via the radio antenna 101 between the radio base station 100 in Fig. 7 and the mobile communication apparatus, as in the case of the first and second embodiments. In the present apparatus, a connection destination candidate list for selecting a connection destination based on the position information is displayed, and the connection destination is selected from the list.

As in the case of the first and second embodiments, assuming that areas as shown in Fig. 3 are provided and position information A to D are allotted to the respective areas, when the mobile communication apparatus transmits/receives position information with an arbitrary radio base station located in the area A, the position of the mobile communication apparatus is defined in the area A.

At step S803, when the user depresses the call origination request switch of the input unit 708 in Fig. 7, the controller 106 determines that a call origination request has been made. Then the registered position information obtained at step S802 is held, and the process proceeds to step S804.

At step S804, the registered position information (area) obtained at step S802 is compared with a table of connection destination names, connection (telephone) numbers of connection destinations, communication speeds and registered position information (areas and adjacent areas) as shown in Fig. 4.

Note that communication charges per unit period include only line use charges but do not include access charges for access to the respective connection destinations. Generally, a line use charge for communication between an area where the radio base station is located and a connection destination within the same area is the lowest. A communication charges for communication to adjacent areas are the same and higher than the line use charge within the same area. Further, a line use charge for communication with a distant area not adjacent to an originating area is further higher than the line use charge for communication with an adjacent area.

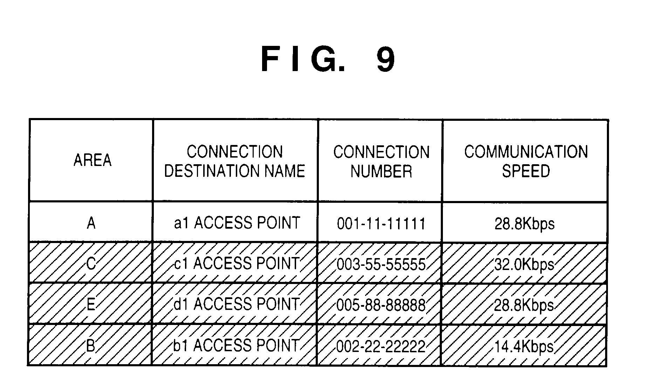

At step S805, if connection destination(s) exists in an area corresponding to the position information, the process proceeds to step S807, at which a connection destination candidate list corresponding to the position information, as shown in Fig. 9, is displayed on the display unit 709. In Fig. 9, a non-hatched row of the area A indicates an access point corresponding to the current position.

Generally, the charge of communication within the same area is the lowest, however, in the present embodiment, connection is not automatically performed, but the user selects an access point. Accordingly, the process proceeds to step S808, at which the al access point within the same area, as an advantageous connection destination otherwise, another one of the access points in hatched rows, can be arbitrarily selected from the list as shown in Fig. 9, in accordance with the user's preference.

That is, the user may select the al access point, with the lowest communication cost per unit period as a line use charge, otherwise, may select another access point, e.g., the cl access point, with a communication speed relatively higher than 28.8 Kbps as the communication speed of the al access point, placing importance on communication speed and response.

For convenience of explanation, the connection destinations other than the al access point are displayed in dark state (hatched in Fig. 9) on the monochrome LCD of the display unit 709, however, if the visibility is poor, to distinguish the advantageous access point from other access points, the advantageous access point may be surrounded by a bold frame, or displayed in another list. Further, if the display unit 709 uses a color display device, the advantageous access point and other access points may be displayed in different colors.

On the other hand, if no corresponding access point exists within the same area, the process proceeds to step S806.

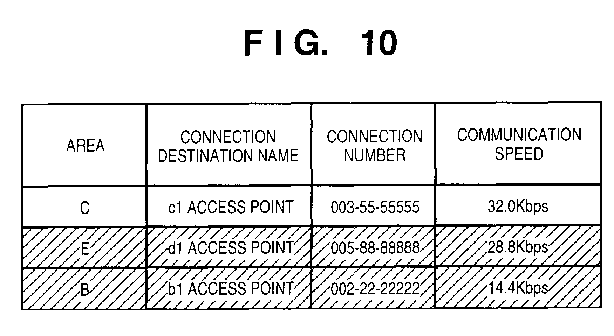

At step S806, a list of access point candidates corresponding to adjacent areas as shown in Fig. 10 is displayed. If the mobile communication apparatus is located in the area D, the adjacent areas B, C and E may be displayed in any order, however, in this embodiment, the access points are weighted based on communication speed, and they are displayed in descending order of communication speed. Further, as the line use charges per unit period are the same with respect to any of the adjacent areas, to display the candidates such that the communication-speed highest and charge-advantageous connection destination name "c1 access point" is emphasized, the other access points than the cl access point are darkened (hatched in Fig. 10).

However, as described in Fig. 9, if the visibility is poor, to distinguish the advantageous access point from other access points, the advantageous access point may be surrounded by a bold frame, or displayed in another list.

Next, the process proceeds to step S808, at which the user arbitrarily selects a connection destination. The user may select the cl access point with the same communication charge and the highest communication speed, or may select another access point from darkened (hatched) rows, from the candidate list as shown in Fig. 10, displayed on the display unit 709, in accordance with the user's preference.

Whether access point(s) exists in the same area or not, communication is started at step S809 with respect to the connection destination selected by the user from the candidate list displayed on the display unit 709 at step S808. The data to be communicated is read from the general memory 107 by the controller 106, and transmitted through the radio controller 103.

In the above example, already-registered access points exist in adjacent areas, however, in a case where no already-registered access point exists in the adjacent areas, access points closer to the apparatus may be selected from the registered access points and displayed as a candidate list. Then, the communication ends at step S810.

As described above, according to the present embodiment, a list of plural connection destination candidates, related to registered position information, is displayed for an area in which the mobile communication apparatus exists, and a connection destination which is most cost-advantageous based on the current position, otherwise, an arbitrary connection destination can be selected from the list by the user's preference, and communication can be performed with the selected connection destination. Further, the candidate list is displayed such that the user can distinguish a charge-advantageous or communication-speed advantageous access point from other access points. This arrangement assists the user to select a connection destination.

### [Fourth Embodiment]

Next, a fourth embodiment of the mobile communication apparatus of the present invention will be described with reference to the drawings.

The difference between the fourth embodiment and the other embodiments is display of connection destination candidate list and its display method. As the feature of the present embodiment, the embodiment provides an environment where the user can check the type of data communication (e.g., transmission of predetermined amount of data like electronic-mail transmission or accessing the Internet for an arbitrary period to see a home page) and related conditions such as the predicted communication costs and communication speeds which influence communication response, then can select a connection destination.

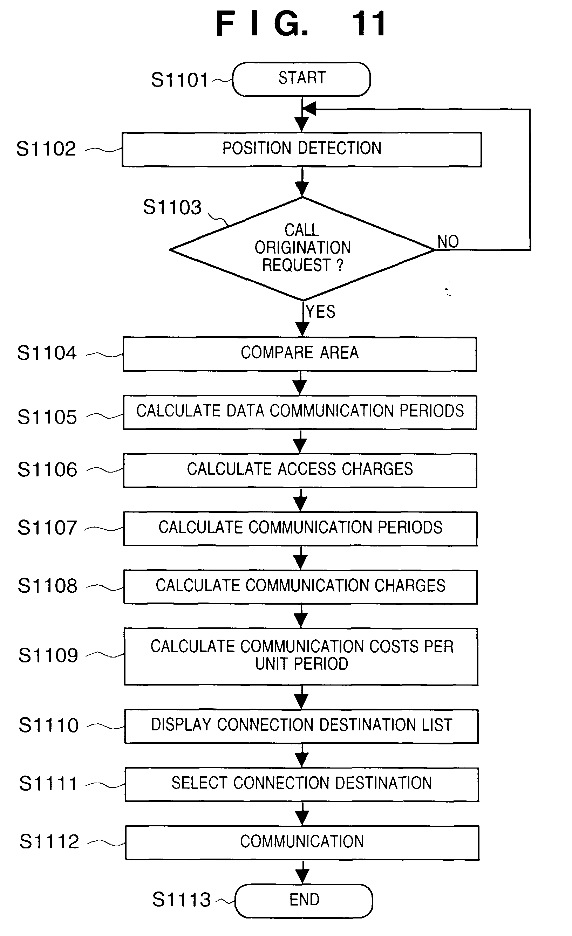

Fig. 11 is a flowchart showing the control procedure of the mobile communication apparatus according to the fourth embodiment. Steps S1101 to S1108 correspond to steps S501 to S508 in Fig. 5 of the second embodiment.

First, at step S1101, the control starts, and at step S1102, registered position information is obtained by radio transmission/reception via the radio antenna 101 between the radio base station 100 in Fig. 7 and the mobile communication apparatus.

At step S1103, when the user depresses a call origination request switch of the input unit 708 in Fig. 7, the controller 106 determines that a call origination request has been made. Then the registered position information obtained at step S1102 is held, and the process proceeds to step S1104.

At step S1104, the registered position information obtained at step S1102 is compared with a table of connection destination names, connection (telephone) numbers of connection destinations, communication speeds and registered position information (areas and adjacent areas), as shown in Fig. 6, stored in the memory 107.

As in the case of the above embodiment, for convenience of explanation, areas as shown in Fig. 3 are provided, and connection destination information correspond to the respective areas as shown in Fig. 6. Assuming that the position information obtained upon key-input of call origination request at step S1103 indicates the area C, at step S1105, if data to be communicated is prepared, a data communication periods are calculated from the amount of data to be communicated and communication speeds.

At step S1106, access charges paid for access to the respective connection destinations are calculated from access charges per unit period defined in accordance with the respective connection destinations as shown in Fig. 6 and data communication periods.

At step S1107, since actual communication causes overhead upon start and end of communication, communication periods including the data communication periods and overhead periods are calculated.

At step S1108, the access charges and line use charges are added as communication charges, and a connection destination is selected based on the communication charges.

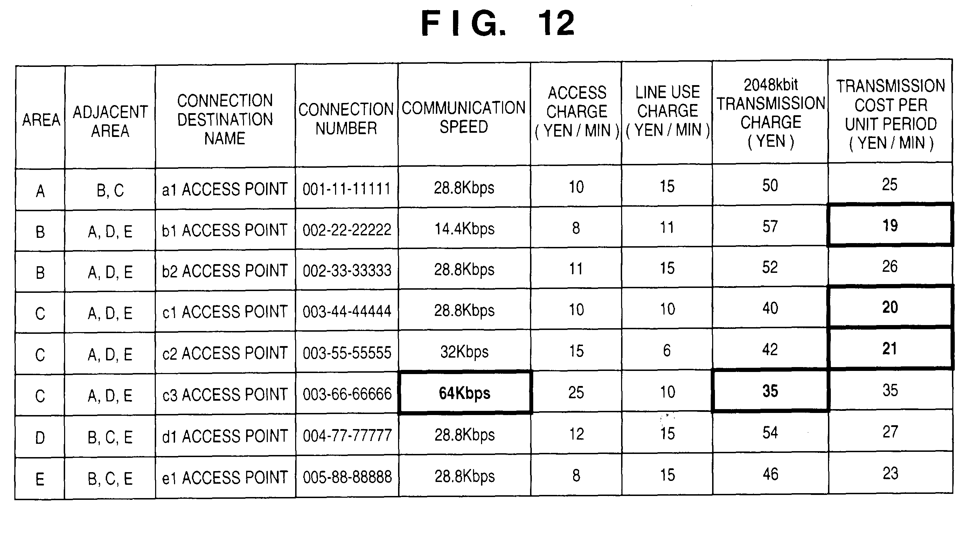

As the contents of processing at steps S1105 to S1108 are basically the same as those at step S505 to S508 of the second embodiment, the details will be omitted. In the present embodiment, various data are calculated on the assumption that the amount of data to be communicated is 2048 kbits, and line use charges per unit period (yen/min) are as shown in Fig. 12, and excess time for connection and disconnection (overhead) is uniformly total 10 sec.

Then, the line use charges (yen) and data transmission charges (yen), obtained by adding access charges of the respective access points to the line use charges, are sequentially obtained.

Different from step S118 at which data transmission charges for transmission of predetermined data are calculated as the communication charges at step S118, costs per unit period (yen/min) are simply calculated at step S1109.

For example, the respective charges for the bl access point are calculated as follows.
· b1 Access Point
   Communication speed: 14.4 Kbps
   Data communication period: (transmission data amount)/(communication speed) = 2048 kbits/14.4 Kbps = 142.2 sec
   Communication period: (data communication period) + (overhead) = 142.2 sec + 10 sec = 152.2 sec
   Access charge: provider's connection service charge via access point = (access charge per unit period) × « (data communication period)/60 sec» = 8 yen/min × « 142.2 sec/60 sec» = 24 yen
   Line use charge: (line use charge per unit period) x «(communication period)/60 sec» = 11 yen/min × «152.2 sec/60 sec» = 33 yen
   2048 kbit transmission charge: (access charge) + (line use charge) = 24 yen + 33 yen = 57 yen
   Cost per unit period: (access charge) + (line use charge) = 8 yen/min + 11 yen/min = 19 yen/min

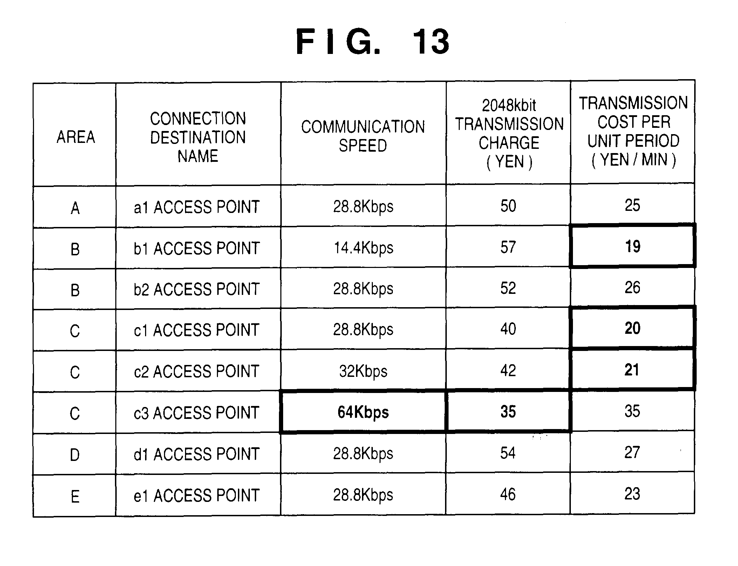

At step S1110, the calculation results for the respective access points corresponding to the position information are displayed on the display unit 709. Fig. 13 shows a connection destination candidate list as an example of the display. The connection candidate list as shown in Fig. 13 shows communication speeds corresponding to the respective access points, 2048 kbit transmission charges as charges for data transmission, and costs per unit period, as necessary information for selection of connection destination from information in the table as shown in Fig. 12.

At step S1111, the user may arbitrarily select the c3 access point with which the 2048 kbit data can be transmitted at the highest speed and at the lowest charge, from the candidate list as shown in Fig. 13 displayed on the display unit 709. Otherwise, the user may select the bl access point with the lowest communication cost per unit period, appropriate to mail transmission/reception or the like in which the amount of data is unknown before connection with a server via an access point is established. Further, the user may select the c2 access point with the highest communication speed, considering that the costs per unit period, 19 yen/min, 20 yen/min and 21 yen/min, for the b1, c1 and c2 access points are not so different from each other.

That is, the present embodiment realizes an environment for selection of connection destination which allows the user to select a connection destination taking type of data communication, predicted communication cost, communication period and communication speed influencing communication response, into consideration. When the connection destination candidate list as shown in Fig. 13 is displayed on the monochrome LCD of the display unit 709, for convenience of explanation, advantageous communication speed, transmission charge and cost per unit period are surrounded by a bold frame, however, if the visibility is poor, they may be emphasized in any other way. Further, if the display unit 709 uses a color display device, the advantageous values and other values may be displayed in different colors, thus an environment more helpful for the user to distinguish those values can be provided.

At step S1112, ccmmunication is performed with respect to the access point selected at step S1111. The data to be communicated is read by the controller 106 from the general memory 107, and transmitted through the radio controller 103.

Then, the communication ends at step S1113.

As described above, according to the present embodiment, information for user's selection of connection destination is provided as a connection destination candidate list, displayed in accordance with registered position information corresponding to an area where the mobile communication apparatus is located, such that the user can select a connection destination from the connection destination candidate list. The user may select, e.g., a communication destination with which a predetermined amount of data can be transmitted at a low communication charge, a communication destination with the lowest cost per unit period, or a communication destination simply with the highest communication speed, from the list, in accordance with the user's preference.

Also, if connection with a connection destination, once selected and accessed, has failed due to some reasons such as line busy status, communication can be performed by displaying the list to select selecting the next connection destination.

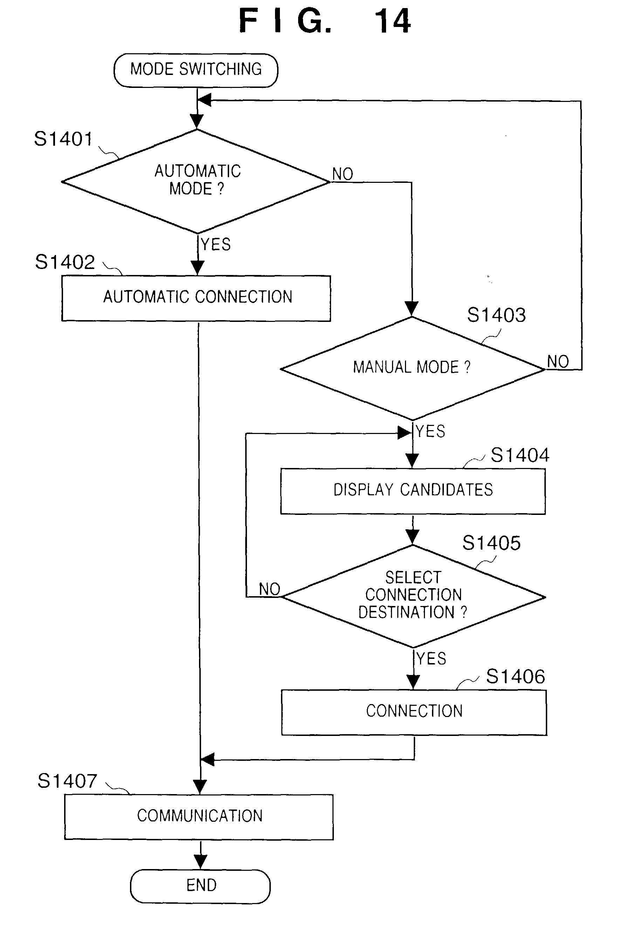

Further, the embodiments provide a first method to automatically select a connection destination and establish connection with the selected destination, and a second method to display connection destination candidates allowing the operator to select one of the candidates, and establish connection with the selected destination. Further, as shown in Fig. 14, it may be arranged such that the user selects one of automatic mode and manual mode, and one of the first method and the second method is selected in accordance with the selected mode.

In Fig. 14, if the automatic mode is selected by operation at the input unit 108 (step S1401), the above-described first method, i.e., the operation of the first or second embodiment is performed (at steps S1402 and S1407). On the other hand, if the manual mode is selected (step S1403), the above-described second method, i.e., the operation of the fourth embodiment (steps S1404 to S1407) is performed. In this manner, one of the operations of the embodiments can be performed in accordance with the user's preference.

Note that the operations of the above-described embodiments are performed by the controller 106 based on the programs stored in the general memory 107, however, a system to perform the same operations may be arranged. In this case, the programs are stored into a storage medium such as a floppy disk, a hard disk, a CD-ROM and a memory card, then the storage medium is inserted into the apparatus and the programs are executed by the controller 106.

As described above, according to the present invention, in a communication apparatus, connection can be established with an optimum connection destination from an arbitrary position. For example, in consideration of the current position, accessible connection destinations, communication speeds for the respective connection destinations, communication periods, communication data amount, charging system of the connection destinations, line use charges and the like, a connection destination advantageous in communication for the user can be automatically selected, and communication can be performed with the selected connection destination.

Further, in addition to the automatic selection of connection destination, a connection destination candidate list can be displayed for the user's selection. In this case, the user can arbitrarily select a connection destination in accordance with speed priority or charge priority, for example, from comparison among conditions of connection destinations.

As many apparently widely different embodiments of the present invention can be made without departing from the spirit and scope thereof, it is to be understood that the invention is not limited to the specific embodiments thereof except as defined in the appended claims.

## Claims

1. A radio communication apparatus connectable to a communication network via a radio control device, comprising:
selection means for selecting a connection destination to be connected via said radio control device based on information on said radio control device connected to said radio communication apparatus; and
connection means for establishing connection with the connection destination selected by said selection means.

2. The radio communication apparatus according to claim 1, wherein said information on said radio control device is information on a position of said radio control device.

3. The radio communication apparatus according to claim 1, wherein said information on said radio control device is information based on identification information of said radio control device.

4. The radio communication apparatus according to claim 1, further comprising:
acquisition means for acquiring said information on said radio control device; and
storage means for storing information on a plurality of connection destinations,
wherein said selection means performs selection based on the information acquired by said acquisition means and the information stored in said storage means.

5. The radio communication apparatus according to claim 1, wherein said selection means automatically performs selection.

6. The radio communication apparatus according to claim 1, further comprising:
notification means for notifying candidates of said connection destination; and
operation means for allowing an operator to select one of the candidates of said connection destination notified by said notification means,
wherein said selection means performs selection based on operation by said operation means.

7. The radio communication apparatus according to claim 1, wherein said storage means stores communication speeds of communication with said plurality of connection destinations,
and wherein said selection means performs selection based on said communication speeds and information on said radio control device connected to said radio communication apparatus.

8. The radio communication apparatus according to claim 1, further comprising:
calculation means for calculating communication charges in connection with said plurality of connection destinations,
wherein said selection means performs selection based on results of calculation by said calculation means.

9. The radio communication apparatus according to claim 1, further comprising:
switching means for switching between an automatic mode allowing said selection means to automatically perform selection and a manual mode for selection based on an operator's operation,
wherein said selection means performs the selection in accordance with a mode selected by said switching means.

10. A radio communication apparatus, included in a communication system having a plurality of radio base stations connected to a first communication network and a plurality of connection means for connecting said first communication network to a second communication network, connectable to said second communication network via one of said radio base stations and one of said connection means, comprising:
discrimination means for discriminating a position of said radio communication apparatus, in accordance with one of said radio base stations connected to said radio communication apparatus;
selection means for selecting at least one of said plurality of connection means, based on discrimination by said discrimination means; and
communication means for establishing connection with the connection means selected by said selection means, and performing communication via said second communication network.

11. The radio communication apparatus according to claim 10, wherein said first communication network includes a line network.

12. The radio communication apparatus according to claim 10, wherein said second communication network includes the Internet.

13. A communication system having a radio control device for connecting a radio communication apparatus to a communication network, comprising:
selection means for selecting a connection destination to be connected to said radio communication apparatus, based on information on the radio control device connected to said radio communication apparatus; and
connection means for connecting said radio communication apparatus to the connection destination selected by said selection means.

14. A communication system having a plurality of radio base stations for connecting a radio communication apparatus to a first communication network and a plurality of connection means for connecting said first communication network to a second communication network, comprising:
discrimination means for discriminating a position of said radio communication apparatus, in accordance with one of said radio base stations connected to said radio communication apparatus; and
selection means for selecting at least one of said plurality of connection means, based on discrimination by said discrimination means.

15. A control method for a radio communication apparatus connectable to a communication network via a radio control device, comprising:
a selection step of selecting a connection destination to be connected via said radio control device based on information on said radio control device connected to said radio connection apparatus; and
a connection step of establishing connection with the connection destination selected at said selection step.

16. A control method for a radio communication apparatus, included in a communication system having a plurality of radio base stations connected to a first communication network and a plurality of connection means for connecting said first communication network to a second communication network, connectable to said second communication network via one of said radio base stations and one of said connection means, comprising:
a discrimination step of discriminating a position of said radio communication apparatus, in accordance with one of said radio base stations connected to said radio communication apparatus;
a selection step of selecting at least one of said plurality of connection means, based on discrimination at said discrimination step; and
a communication step of establishing connection with the connection means selected at said selection step, and performing communication via said second communication network.

17. A control method for a communication system having a radio control device for connecting a radio communication apparatus to a communication network, comprising:
a selection step of selecting a connection destination to be connected to said radio communication apparatus, based on information on the radio control device connected to said radio communication apparatus; and
a connection step of connecting said radio communication apparatus to the connection destination selected at said selection step.

18. A control method for a communication system having a plurality of radio base stations for connecting a radio communication apparatus to a first communication network and a plurality of connection means for connecting said first communication network to a second communication network, comprising:
a discrimination step of discriminating a position of said radio communication apparatus, in accordance with one of said radio base stations connected to said radio communication apparatus; and
a selection step of selecting at least one of said plurality of connection means, based on discrimination at said discrimination step.

19. A computer-readable storage medium containing a program for controlling a radio communication apparatus having a radio communication function, comprising:
selection process procedure for selecting a connection destination to be connected via said radio control device based on information on said radio control device connected to said radio connection apparatus; and
connection process procedure for establishing connection with the connection destination selected at said selection process.

20. A computer-readable storage medium containing a program for controlling a radio communication apparatus, included in a communication system having a plurality of radio base stations connected to a first communication network and a plurality of connection means for connecting said first communication network to a second communication network, connectable to said second communication network via one of said radio base stations and one of said connection means, comprising:
discrimination process procedure for discriminating a position of said radio communication apparatus, in accordance with one of said radio base stations connected to said radio communication apparatus;
selection process procedure for selecting at least one of said plurality of connection means, based on discrimination at said discrimination process; and
communication process procedure for establishing connection with the connection means selected at said selection process, and performing communication via said second communication network.
